# EUROPEAN PATENT SPECIFICATION

(11) **EP 0 599 662 B1**
(45) Date of publication and mention of the grant of the patent: **31.01.1996**
(21) Application number: 93309473.2
(22) Date of filing: 26.11.1993
(51) Int. Cl.: F16L 3/22, F16B 37/08

(54) **Pipe fastener**
Rohrbefestigungsanordnung
Dispositif de fixation d'un tuyau

(30) Priority: 27.11.1992 JP 82001/92 U
(43) Date of publication of application: 01.06.1994
(73) Proprietor: EMHART INC., Newark, Delaware 19711 (US)
(72) Inventor: Maruyama, Toshio, Toyohashi City (JP)
(74) Representative: Randall, John Walter

(56) References cited:
- FR-A- 2 558 902
- JP-U-45 006 282

## Description

The present invention relates to a pipe fastener for securing a fuel pipe, a brake line or the like held, say, on a panel of a vehicle body.

A number of pipe fasteners made of synthetic resin have been developed to secure a fuel pipe, a brake line or the like held on, say, a panel such as a vehicle body. For example, Japanese Patent Publication No.2-36806 describes one such. This pipe fastener has a nut-like member to be fixed to a stud which is secured e.g. by welding to a panel and whose sides are threaded, a base, and a pipe holding member having pipe grip portions which extend transversely integrally from the base and hold e.g. pipes when the pipes are pressed into opened portions thereof, and it is constructed so that the pipes held in the pipe grip portions of the pipe holding member can be secured thereby on the panel when the nut-like member is applied to the stud to fix the base of the pipe holding member to the panel. As this pipe fastener is capable of being fixed temporarily to a threaded stud, securing the pipe fastener can be accomplished with ease.

Generally, a shield is provided for the protection of pipes to be held on a vehicle body by means of a pipe fastener. In the above-described pipe fastener, the mounting operation is complicated because the nut-like member has to be screwed by hand using a tool such as an impact wrench while the shield and the pipe fastener are being held by the other hand. Japanese Utility Model publication No.4-56282 discloses a pipe fastener having structure which allows its shield to be prior attached to the pipe holding member, thereby facilitating the mounting of the pipe fastener.

The pipe holding member of a pipe fastener needs to have pipe grip portions of varied configurations so as to meet variations in size and shape of pipes to be held. Although the base portion of the pipe holding member can retain the same configuration as long as the nut-like member is unchanged, a number of pipe holding members are required to deal with different sizes and shapes of pipes. Therefore, numerous pipe holding members whose pipe grip portions are different but having bases for nut-like member connection in the same form have to be prepared. Particularly, as the base portion has a complicated shape in order to connect the nut-like member thereto, each pipe holding member is produced from a metal mould of a complicated shape and this inevitably raises the cost of the pipe holding member .

Accordingly, the present invention aims to provide an inexpensive pipe fastener by simplifying the configuration of the base of pipe holding member to reduce the cost of the pipe holding member assembly.

According to the present invention, there is provided a pipe fastener having a nut-like member to be fixed to a stud which is secured to a panel and whose sides are threaded, and a pipe holding member having a base and pipe grip portions which extend integrally from the base transversely and hold pipes when the pipes are pressed into opened portions thereof, the pipe holding member being fixed to the panel when the nut-like member is fixed to the stud so that the pipes held in the pipe grip portions of the pipe holding member can be secured on the panel, wherein the fastener has a shield to cover the pipe holding member from the back for protecting the pipes, and shield engaging means is provided on the back of the pipe holding member, whose base is formed with a recess, the shield being provided with a coupling portion to be inserted into the recess in the base so as to be connected to the pipe holding member when the coupling portion is received in the recess, the shield coupling portion being formed with a cavity to receive a shank of the nut-like member, which is connected to the shield when the shank is received in the cavity, temporarily fixing means being formed in the cavity of the coupling portion of the shield so as to engage with threads of the stud.

In order that the invention be better understood, preferred embodiments will now be described in greater detail by way of example with reference to the accompanying drawings in which:-
Figure 1 is a plan view of a pipe holding member of a pipe fastener according to the present invention;
Figure 2 is a front view of the pipe holding member of Figure 1;
Figure 3 is a bottom view of the pipe holding member of Figure 1;
Figure 4 is a side view of the pipe holding member of Figure 1;
Figure 5 is a sectional view taken along the line A-A of Figure 1;
Figure 6 is a partial plan view of a shield for a pipe fastener according to the present invention;
Figure 7 is a front view of the shield of Figure 6;
Figure 8 is a sectional view taken along the line A-A of Figure 6;
Figure 9 is a sectional view taken along line B-B of Figure 7;
Figure 10 is a perspective view of a nut-like member of a pipe fastener according to the present invention;
Figure 11 is a drawing showing the steps to mount pipes on a panel by the use of a pipe fastener according to the present invention, and
Figure 12 illustrates pipes mounted on the panel by the use of a pipe fastener according to the present invention.

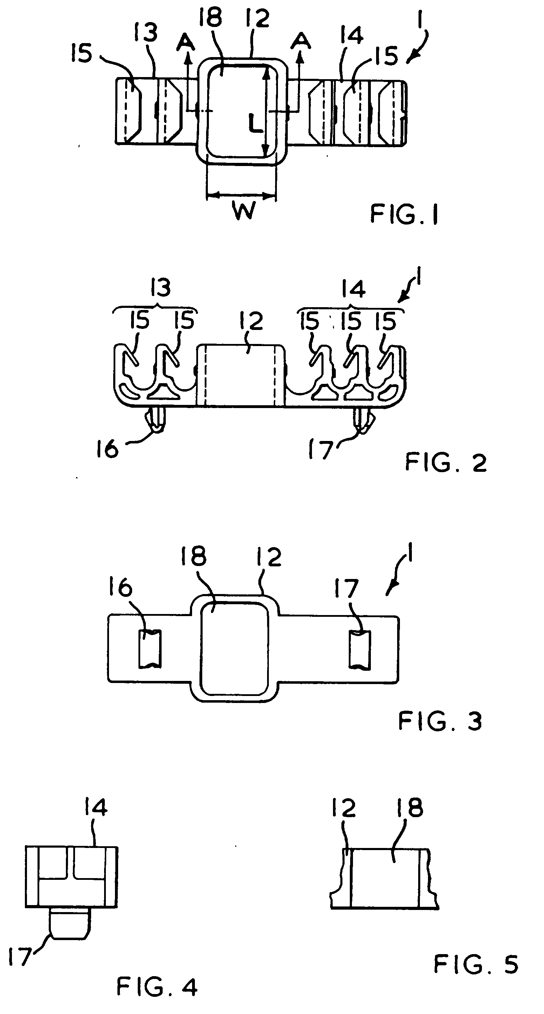

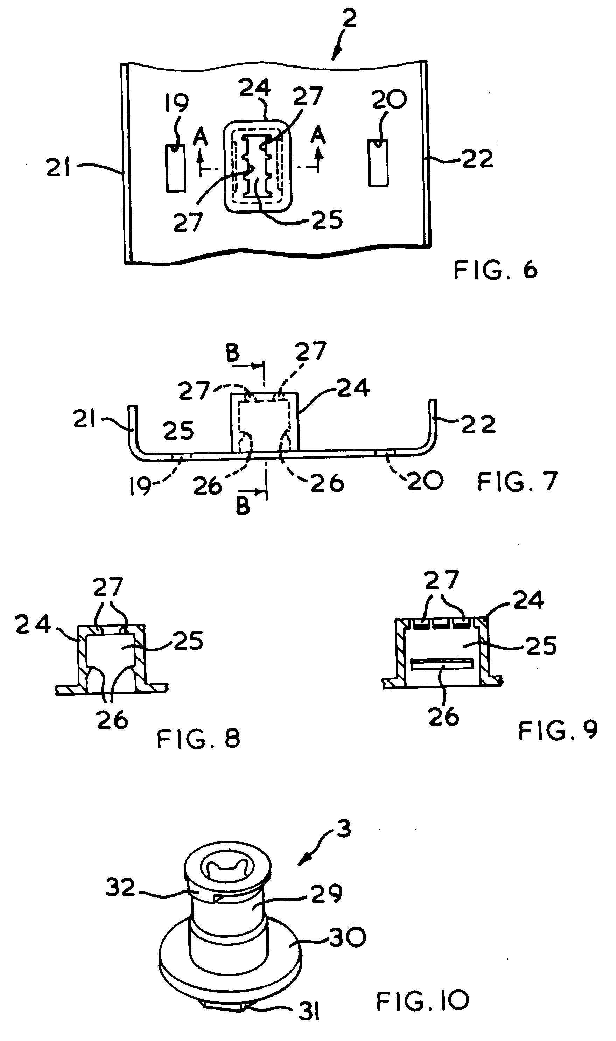

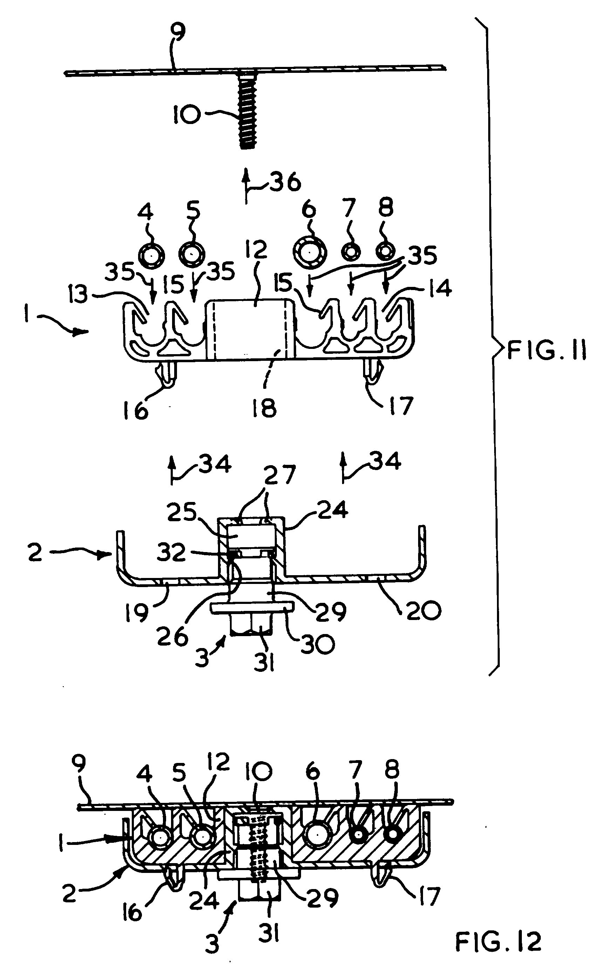

Referring to the drawings, a pipe fastener according to the present invention comprises a pipe holding member (1) (see Figures 1 through 5), a shield (2) (see Figures 6 through 9) and a nut-like member (3) (see Figure 10). As shown in Figure 11, these three members (1, 2 and 3) are connected to each other and secure a plurality of pipes (4 through 8) to a panel (9) such as a vehicle body, as seen in Figure 12 by using a threaded stud (10) welded to the panel. The members (1,2 and 3) are plastic mouldings and initially handled in the state in which they are connected to each other, i.e. as an assembled integral body, for the convenience both of transport and of the pipe mounting operation.

Referring to Figures 1 through 5, the structure of the pipe holding member (1) is described in the following. The pipe holding member (1) comprises a base (12) which is formed simply like a box without a bottom or a ceiling and has a hole that is substantially rectangular in section, and the pipe grip portions (13 and 14) integrally formed on both sides of the base so as to extend transversely. The pipe grip portions (13 and 14) have substantially U-shaped troughs opened upwardly, each trough formed with a resilient finger (15) extending from an upper end thereof diagonally toward the bottom so as to prevent a pipe pressed therento from escaping. On the back of the pipe grip portions (13 and 14), two engagement pawls (16 and 17) spaced from each other by a predetermined amount are provided to hold the shield (2). Although the engagement pawls are illustrated in a specific shape, they may be in any shape as long as they can fasten the shield (2) and their number is also optional. The hole which is formed in the base (12) and is rectangular in section is referred to as the recess (18) hereinafter.

With reference to Figures 6 through 9, shield (2) as a whole is elongated over the back of the pipe holding member (1) and further in the longitudinal direction of the pipes so that it can cover them extendedly over a required length. As shown in Figure 7, end portions on both side of the shield are formed as walls (21 and 22) standing along the sides of the pipe grip portions of the pipe holding member (1) to increase its own strength in addition to pipe protection. Holes (19 and 20) are also formed in shield (2) to receive and engage with the engagement pawls (16 and 17) formed on the back of the pipe holding member (1) so that both members can be coupled to each other when the pipe holding member (1) is pressed onto shield (2) (or vice versa).

The shield (2) is provided in the centre with a coupling portion (24) to be inserted into the recess (18) of base (12) of the pipe holding member (1). The coupling portion (24) is in a box-like shape and is received in the recess (18) formed in base (12), whereby the shield (2) is connected to the pipe holding member (1). The coupling portion (24) is formed with a cavity (25) to receive a shank of the nut-like member (3) and the cavity (25) is formed with engagement pawls (26) to engage with the shank of the nut-like member (3) when the shank of the nut-like member is received in it. Temporarily fixing engagement pawls (27) to engage with threads of the threaded stud are formed in an upper portion of the cavity (25) and they function to fix the pipe fastener to the stud temporarily. The cavity (25) is a long hole in section, elongated longitudinally with respect to pipes held in the pipe holding member (1). The engagement pawls (26) and the temporarily fixing engagement pawls (27) are also elongated. This allows the nut-like member (3) received in the cavity (25) to move therein in the direction of the elongated hole so that longitudinal (in the direction L of Figure 1) displacement of the pipes can be corrected without moving the pipes.

The coupling portion (24) is formed small enough to have play in the direction W of Figure 1 in the box-like recess (18) of the pipe holding member (1) so as to be movable perpendicularly to the longitudinal direction of the pipes, (i.e. in the direction W). The length of the coupling portion (24) in the direction W is shorter than the length of recess (18) thus permitting play in the direction W. Owing to this, the position can be adjusted also in the direction W by moving the coupling portion (24), and the shield (2) in its turn, relatively to the pipe holding member (1). The holes (19 and 20) with which the engagement pawls (16 and 17) come into engagement are also elongated in the direction W of Figure 1 to allow the shield (2) and the pipe holding member (1) to move in the direction W relatively to each other. Resilient pieces may be formed on both sides of the coupling portion (24) in the direction W to be in resilient contact with the sides of the recess (18) for the prevention of shaking.

The nut-like member (3) will be described with reference to Figure 10. The nut-like member (3) comprises a hollow shank (29) to receive the threaded stud (10), a flange (30) formed below the shank (29), and a head (31) formed on the lower side of the flange. To facilitate rotation of the nut-like member (3), the head (31) is formed e.g. as a hexagon. On the top of the shank (29), engagement portions (32) are formed to engage with the engagement pawls (26) in the cavity (25) of the coupling portion (24). When the head (31) of the nut-like member (3) is rotated by means of an impact wrench or the like to press the hollow shank (29) round the threaded stud, the threaded stud is screwed into the shank (24) and they are thus secured to each other. Such screwing fixes the pipe fastener to the stud (10), thereby fixing the pipes held in it to the panel (9). Inverse rotation of the head (31) allows the pipe fastener to be detached from the stud (10). Forming the engagement portions (32) in two positions diametrically facing each other as illustrated, instead of an engagement portion round the entire periphery of the shank (29), and making the rest of the periphery slanted surfaces, enables the nut-like member (3) to be detached easily from the coupling portion (24) when rotated.

The steps of mounting the pipes (4 through 8) on the panel (9) by the use of a pipe fastener of the above-described structure will be described with reference to Figures 11 and 12. When shank (29) of the nut-like member (3) is inserted into the cavity (25) of the coupling portion (24) and the engagement portions (32) are brought into engagement with the engagement pawls (26), the nut-like member (3) is connected to the shield (2). When the shield (2) is pressed onto the back of the pipe holding member (1) as indicated by arrow (34), the resultant engagement between engagement pawls (16 and 17) and the holes (19,20) connects shield (2) to the pipe holding member. With this connection, the coupling portion (24) of shield (2) is inserted in recess (18) of the base of the pipe holding member (1). The pipes (4 through 8) are pressed into the pipe grip portions (13 and 14) as indicated by arrow (35) and held by the resilient fingers (15).

The assembled pipe fastener already holding the pipes (4 through 8) may thus be delivered to a motor vehicle assembly line. In the assembly line, the pipe fastener in the above-mentioned state is pressed so as to receive the threaded stud (10) into the cavity of the coupling portion (24), and the temporarily fixing engagement pawls (27) of the coupling portion (24) come into engagement with threads of the stud (10) and thus temporarily fix the pipe fastener to the stud (10). In this temporarily fixing process, the pipe fastener is correctly positioned to the stud so that the pipes (4 through 8) held in it can be positioned as desired on the panel surface. In the pipe fastener is out of position relative to the stud in the direction L of Figure 1, i.e. in the longitudinal direction of the pipes, adjustment is made by moving the pipes in the direction L from the pipe grip portions (or by making use of the cavity (25) of the coupling member (24) which is elongated in section). Should the pipe fastener be out of position relative to the stud in the direction W of Figure 1, i.e. perpendicularly to the longitudinal direction of the pipes, its position can be adjusted by moving shield (2) and the pipe holding member (1) relatively to each other.

When the head (31) of the nut-like member (3) is rotated by means of an impact wrench or the like, the threaded stud (10) is screwed into the hollow shank (29) of the nut-like member (3) while tapping the latter, and shield (2) is pushed upward by flange (30) to press the coupling portion (24) together with the pipe holding member (1) firmly onto the panel (9). The pipe fastener is thus fixed and the pipes (4 through 9) are firmly connected to the panel (9). This resultant state is shown in Figure 12. If the pipe fastener (1) needs to be detached for the replacement of pipes or some other reason, rotating the head (31) of the nut-like member (3) inversely allows it to be removed easily.

The pipe fastener according to the present invention has a shield to cover the pipe holding member from the back to protect pipes, and shield engaging means is provided on the back of the pipe holding member. The shield is provided with a coupling portion to be inserted into the recess in the base and the protector is connected to the pipe holding member while the coupling portion is received in the recess. The coupling portion of the protector is formed with a cavity to receive the shank of the nut-like member, which is connected to the shield while the shank is received in the cavity. The cavity of the coupling portion of the protector is formed with temporarily fixing engagement means to engage with threads of a stud. Such a structure allows the base of pipe holding members to deal with different sizes, and layouts of pipes can prepared cheaply, thus giving a reduction in the price of the pipe fastener as a whole. Changes in pipe layout are dealt with by replacing pipe holding members whilst retaining the base

Further, the pipe fastener according to the present invention allows the coupling portion of the shield to be received easily in the recess of the pipe holding member while permitting play which enables the fastener to move perpendicularly to the longitudinal direction of the pipes held therein. This provides two-dimensional adjustment of pipe positions on the surface of panel, for example, when they are mounted on a vehicle body; their positions can be adjusted not only longitudinally but also perpendicularly to their longitudinal direction.

## Claims

1. A pipe fastener having a nut-like member (3) to be fixed to a stud (10) which is secured to a panel (9) and whose sides are threaded, and a pipe holding member (1) having a base (12) and pipe grip portions (13,14) which extend integrally from the base (12) transversely and hold pipes when the pipes are pressed into opened portions thereof, the pipe holding member (1) being fixed to the panel (9) when the nut-like member (3) is fixed to the study (10) so that the pipes held in the pipe grip portions (13,14) of the pipe holding member (1) can be secured on the panel (9), wherein the fastener has a shield (2) to cover the pipe holding member (1) from the back for protecting the pipes, and shield engaging means (16,17) is provided on the back of the pipe holding member (1), whose base (12) is formed with a recess (18), characterised in that the shield is provided with a coupling portion (24) to be inserted into the recess (18) in the base (12) so as to be connected to the pipe holding member (1) when the coupling portion (24) is received in the recess (18), the shield coupling portion (24) being formed with a cavity (25) to receive a shank of the nut-like member (3), which is connected to the shield (2) when the shank is received in the cavity (25), temporarily fixing means (27) being formed in the cavity (25) of the coupling portion (24) of the shield (2) so as to engage with threads of the stud (10).

2. A pipe fastener according to Claim 1, wherein the coupling portion (24) of the shield (2) is received in the recess (18) of the pipe holding member (1) which has play which allows the coupling portion (24) to move perpendicularly to the longitudinal direction of the pipes held in the pipe holding member (1).

## Patentansprüche

1. Rohrleitungsbefestiger mit einem mutterartigen Bauteil (3), welches an einem Bolzen (10) zu fixieren ist, der an einer Platte (9) befestigt ist und dessen Seiten mit Gewinde versehen sind, wobei ein Rohrhalteteil (1) mit einem Boden (12) und mit Rohrgreifabschnitten (13, 14) vorgesehen ist, die sich einteilig von dem Boden (12) quer erstrecken und Rohrleitungen halten, wenn letztere in ihre geöffneten Abschnitte gedrückt sind, wobei das Rohrhalteteil (1) an der Platte (9) befestigt wird, wenn das mutterartige Bauteil (3) an dem Bolzen (10) fixiert ist, so daß die in den Rohrgreifabschnitten (13, 14) des Rohrhalteteiles (1) gehaltenen Rohre an der Platte (9) befestigbar sind, wobei der Befestiger eine Abschirmung (2) aufweist, um das Rohrhalteteil (1) von der Rückseite zum Schutz der Rohrleitungen abzudecken, wobei eine die Abschirmung ergreifende Einrichtung (16, 17) an der Rückseite des Rohrhalteteiles (1) vorgesehen ist, dessen Boden (12) mit einer Ausnehmung (18) ausgebildet ist,
**dadurch gekennzeichnet,** daß
die Abschirmung (2) mit einem Kupplungsabschnitt (24) versehen ist, der in die Ausnehmung (18) in dem Boden (12) einsetzbar ist, um mit dem Rohrhalteteil (1) verbunden zu werden, wenn der Kupplungsabschnitt (24) in der Ausnehmung (18) aufgenommen ist, wobei der Kupplungsabschnitt (24) der Abschirmung mit einem Hohlraum (25) zur Aufnahme eines Schaftes des mutterartigen Bauteiles (3) ausgebildet ist, der mit der Abschirmung (2) verbunden ist, wenn der Schaft in dem Hohlraum (25) aufgenommen ist, und daß temporär fixierende Einrichtungen (27) in dem Hohlraum (25) des Kupplungsabschnittes (24) der Abschirmung (2) ausgebildet ist, um Gewinde des Bolzens (10) zu ergreifen.

2. Rohrleitungsbefestiger nach Anspruch 1, dadurch gekennzeichnet, daß der Kupplungsabschnitt (24) der Abschirmung (2) in der Ausnehmung (18) des Rohrhalteteiles (1) aufgenommen sind, welches ein Spiel hat, so daß der Kupplungsabschnitt (24) rechtwinklig zur Längsrichtung der Rohrleitungen bewegbar ist, die in dem Rohrhalteglied (1) gehalten sind.

## Revendications

1. Attache de tubes ayant un élément (3) analogue à un écrou destiné à être fixé à un goujon (10) qui est fixé à un panneau (9) et dont les côtés sont filetés, et un élément de retenue des tubes ayant une base (12) et des parties (13, 14) de prise des tubes qui partent de la base dans la direction transversale, en une seule pièce avec cette base, et qui retiennent des tubes lorsque les tubes sont emboîtés dans leurs parties ouvertes, l'élément (1) de retenue des tubes étant fixé au panneau (9) lorsque l'élément (3) analogue à un écrou est fixé au goujon (10), de sorte que les tubes retenus dans les parties (13, 14) de prise des tubes de l'élément (1) de retenue des tubes peuvent être fixés au panneau (9), dans laquelle l'attache possède un protecteur (2) pour recouvrir l'élément (1) de retenue des tubes par l'arrière pour protéger les tubes, et un moyen (16, 17) d'attaque du protecteur est prévu sur l'arrière de l'élément (1) de retenue des tubes, dont la base (12) est munie d'un évidement (18), caractérisée en ce que le protecteur est muni d'une partie d'accouplement (24) destinée à être insérée dans l'évidement (18) ménagé dans la base (12) de manière à être reliée à l'élément (1) de retenue des tubes lorsque la partie d'accouplement (24) est reçue dans l'évidement (18), la partie d'accouplement (24) du protecteur étant munie d'une cavité (25) pour recevoir une tige de l'élément (3) analogue à un écrou, qui est relié au protecteur (2) lorsque la tige est logée dans la cavité (25), des moyens de fixation temporaire (27) étant formés dans la cavité (25) de la partie d'accouplement (24) du protecteur (2) de manière à coopérer avec les filets du goujon (10).

2. Attache de tubes selon la revendication 1, dans laquelle la partie d'accouplement (24) du protecteur (2) est reçue dans l'évidement (18) de l'élément (1) de retenue de tubes qui a un jeu qui permet à la partie d'accouplement (24) de se déplacer perpendiculairement à la direction longitudinale des tubes retenus dans l'élément (1) de retenue des tubes.
